# EUROPEAN PATENT SPECIFICATION

(11) **EP 3 519 490 B1**
(45) Date of publication and mention of the grant of the patent: **20.03.2024**
(21) Application number: 17787276.9
(22) Date of filing: 20.09.2017
(51) Int. Cl.: C08K 5/18, C08K 5/3417, C08K 5/42

(54) **MOISTURE CURABLE POLYOLEFIN COMPOSITIONS**
FEUCHTIGKEITSHÄRTBARE POLYOLEFINZUSAMMENSETZUNGEN
COMPOSITIONS DE POLYOLÉFINE DURCISSANT À L'HUMIDITÉ

(30) Priority: 28.09.2016 US 201662400769 P
(43) Date of publication of application: 07.08.2019
(73) Proprietor: Dow Global Technologies LLC, Midland, MI 48674 (US)
(72) Inventor: LI, Dachao, Collegeville PA 19426 (US); TALREJA, Manish, Collegeville PA 19426 (US); COGEN, Jeffrey M., Collegeville PA 19426 (US); PERSON, Timothy J., Collegeville PA 19426 (US); CARONIA, Paul J., Collegeville PA 19426 (US)
(74) Representative: Boult Wade Tennant LLP
(86) International application number: PCT/US2017/052369
(87) International publication number: WO 2018/063866

(56) References cited:
- WO-A1-2015/200015
- WO-A1-2015/200016
- US-A1- 2005 049 335
- US-A1- 2008 176 981

## Description

### FIELD

The field includes moisture curable polyolefin compositions; formulations useful for making the compositions; moisture-cured polyolefin compositions prepared therefrom; methods of making the compositions; manufactured articles comprising or made from the compositions; and methods of using the manufactured article.

### INTRODUCTION

US 5,367,030 to Y. Gau et al. relates to a process for crosslinking a thermoplastic ethylene silane copolymer which comprises forming the ethylene silane copolymer in a thermoforming operation into a shaped article and thereafter subjecting the thermoplastic ethylene silane copolymer shaped article to a solution of benzoic acid in an amount and for a time sufficient to crosslink the thermoplastic ethylene silane copolymer.
WO 2015/200015 and WO 2015/200016 relate to stabilized moisture-curable polymeric compositions. US 2005/049335 relates to flame retardant insulation compositions having improved abrasion resistance.

US 2002/0198335 A1 to R. Bernier et al. relates to a process for producing polymer in a gas phase reactor by introducing a stream of monomer and gas into a polymerization zone while providing at least one liquid component in the polymerization zone.

US 2008/0176981 A1 to M. Biscoglio et al. (BISCOGLIO) relates to a moisture-crosslinkable polymeric composition comprising (a) a silane-functionalized olefinic polymer, (b) an acidic silanol condensation catalyst, and (c) a secondary-amine-containing antioxidant composition. The antioxidant composition can be (1) a secondary amine substituted with two aromatic groups or (2) a combination of a first antioxidant and a secondary amine antioxidant substituted with at least one aromatic group. The moisture-crosslinkable polymeric composition can be used for making fibers, films, pipes, foams, and coatings. The compositions may be applied as a coating over a wire or a cable.

BISCOGLIO's moisture crosslinkable polymeric composition is prepared from a 2-part formulation consisting of an additive package in one part and the (a) silane-functionalized olefinic polymer, such as DFDB-5451 ethylene/silane copolymer, in another part [0037]. The additive package contains, among other constituents, the (b) acidic silanol condensation catalyst, such as a sulfonic acid, and the (c) secondary amine [0037]. The (c) secondary amine may be substituted with two aromatic groups [0005]. The DFDB-5451 is a prepolymer that contains moisture curable silane groups. The moisture crosslinkable polymeric composition is prepared by extruding the additive package at 5 wt% into the DFDB-5451 [0037]. The moisture crosslinkable polymeric composition may be cured by contacting it with water such as by exposing the composition at 23° C. and 70% relative humidity for two days [0039]. The additive package by itself is not moisture curable because it lacks the silane-functionalized olefinic polymer. The DFDB-5451 ethylene/silane copolymer by itself is not moisture curable because it lacks the acidic silanol condensation catalyst.

BISCOGLIO list certain additive packages in Tables I and VI. Additive packages of Examples (Ex.) 3 and 4 contain, among other constituents, an alkyl aromatic sulfonic acid (NACUR^{™} B201) at 4.00 wt% and a first aromatic secondary amine (Naugard 445) at 2.00 wt% (Table I). Additive packages of Ex. 18 and 19 contain, among other constituents, the alkyl aromatic sulfonic acid (NACUR^{™} B201, also known as NACURE B201) at 4 wt% and the first secondary aromatic amine (Naugard 445) at 3.33 wt% (Table VI). The additive package of Comparative Example (C. Ex.) 3 contains, among other constituents, the alkyl aromatic sulfonic acid (NACUR^{™} B201) at 4.00 wt% and a second (different) aromatic secondary amine (Super Q) at 4.00 wt% (Table I). The additive packages of Ex. 18 and 19 were tested for lower explosivity limit only ([0043] and Table VI), and were not extruded into ethylene/silane copolymer DFDB-5451. The additive packages of Ex. 3 and 4 were separately extruded at 5 wt% into ethylene/silane copolymer DFDB-5451 to give examples of moisture crosslinkable polymeric compositions containing 0.20 wt% of the alkyl aromatic sulfonic acid (NACUR^{™} B201) and 0.17 wt% of the first aromatic secondary amine (Naugard 445). The additive package of C. Ex. 3 was extruded at 5 wt% into ethylene/silane copolymer DFDB-5451 to give a comparative example of a polymeric composition that contained 0.20 wt% of the alkyl aromatic sulfonic acid (NACUR^{™} B201) and 0.20 wt% of the second aromatic secondary amine (Super Q). The moisture crosslinkable polymeric compositions containing the additive package of Ex. 3 or 4 and the polymeric composition containing the additive package of C. Ex. 3 were exposed to moisture curing conditions comprising 23° C. and 70% relative humidity for two days [0039]. The moisture crosslinkable polymeric compositions containing 0.20 wt% of the alkyl aromatic sulfonic acid (NACUR^{™} B201) and 0.17 wt% of the first aromatic secondary amine (Naugard 445) cured, but the polymeric composition containing 0.20 wt% of the alkyl aromatic sulfonic acid (NACUR^{™} B201) and 0.20 wt% of the second aromatic secondary amine (Super Q) did not cure [0039].

### SUMMARY

In a first aspect, the invention provides the moisture-curable polyolefin composition of claim 1. In further aspects the invention provides the two-part formulation of claim 7, the method of claim 9, the moisture-cured polyolefin composition of claim 10, the manufactured article of claim 11, the coated conductor of claim 12 and the method of claim 13.

We (the present inventors) believe that BISCOGLIO teaches polymeric compositions comprising (a) silane-functionalized olefinic polymer (e.g., DFDB-5451), (b) an acidic silanol condensation catalyst (e.g., NACUR^{™} B201), and (c) a secondary amine antioxidant (e.g., Naugard 445 or Super Q) do not cure if the concentration of the secondary amine antioxidant in the polymeric composition is 0.20 wt% or higher. This teaching can be understood by observing that if concentration of the secondary amine antioxidant (e.g., Naugard 445 or Super Q) is too high in the polymeric composition, the secondary amine can block or neutralize the catalytic effect of the (b) acidic silanol condensation catalyst (e.g., NACUR^{™} B201). We have conceived a technical solution to this problem that includes a moisture-curable polyolefin composition comprising a (hydrolyzable silyl group)-functional polyolefin prepolymer, an acidic condensation catalyst, and a secondary diarylamine of formula (I): (R¹-Ar)₂NH, wherein each Ar is benzene-1,4-diyl or both Ar are bonded to each other and taken together with the NH of formula (I) constitute a carbazole-3,6-diyl; and each R¹ is independently (C1-C20)hydrocarbyl; wherein constituent (C) secondary diamine of formula (I) is from > 0.200 weight percent (wt%) to 0.500 wt% based on total weight of the moisture-curable polyolefin composition. We discovered that the secondary diarylamine is an effective antioxidant and can be used at concentrations greater than 0.20 wt% in such moisture-curable polyolefin composition without preventing curing. The moisture-curable polyolefin composition unexpectedly has satisfactory curing rates and heat aging performance. Also conceived is a formulation useful for making the composition; a moisture-cured polyolefin composition prepared by moisture-curing the moisture-curable polyolefin composition; a method of making the composition; a manufactured article comprising or made from the composition; and a method of using the manufactured article.

### DETAILED DESCRIPTION

Examples of embodiments include the following numbered aspects.

Aspect 1. A moisture-curable polyolefin composition comprising constituents (A) to (C): (A) a (hydrolyzable silyl group)-functional polyolefin prepolymer, (B) an acidic condensation catalyst, and (C) a secondary diarylamine of formula (I): (R¹-Ar)₂NH (I), wherein each Ar is benzene-1,4-diyl or both Ar are bonded to each other and taken together with the NH of formula (I) constitute a carbazol-3,6-diyl; and each R¹ is independently (C₁-C₂₀)hydrocarbyl; wherein constituent (C) secondary diamine of formula (I) is from > 0.200 weight percent (wt%) to 0.500 wt% based on total weight of the moisture-curable polyolefin composition.

Aspect 2. The composition of aspect 1 wherein in the (C) secondary diarylamine of formula (I): (i) each Ar is benzene-1,4-diyl; (ii) both Ar are bonded to each other and taken together with the NH of formula (I) constitute a carbazol-3,6-diyl; (iii) each R¹ is independently (C₁-C₁₀)hydrocarbyl; (iv) each R¹ is independently (C₇-C₂₀)hydrocarbyl; (v) each R¹ is independently benzyl, 1-phenylethyl, or 1-methyl-1-phenylethyl; (vi) 1-methyl-1-phenylethyl; (vii) both (i) and any one of (iii) to (vi); or (viii) both (ii) and any one of (iii) to (vi).

Aspect 3. The composition of aspect 1 or 2 wherein the (C) secondary diamine of formula (I) is: (i) from 0.220 wt% to 0.500 wt%, (ii) from 0.250 wt% to 0.50 wt%, or (iii) from 0.220 wt% to 0.40 wt%; all based on total weight of the moisture-curable polyolefin composition.

Aspect 4. The composition of any one of aspects 1 to 3 wherein the (B) acidic condensation catalyst is (i) an organosulfonic acid, an organophosphonic acid, or a hydrogen halide; (ii) an organosulfonic acid; (iii) an alkyl-substituted arylsulfonic acid; (iv) an alkyl-substituted arylsulfonic acid wherein there is/are 1 or 2 (C₅-C₂₀)alkyl substituent(s) and 1 aryl group that is phenyl or naphthyl; (v) a (C₁-C₅)alkylphosphonic acid, wherein the (C₁-C₅)alkyl is unsubstituted or substituted with one -NH₂ group; (vi) HF, HCl, or HBr; (vii) a combination of any two or more of (i) to (vi).

Aspect 5. The composition of any one of aspects 1 to 4 wherein in the (A) (hydrolyzable silyl group)-functional polyolefin prepolymer: (i) each hydrolyzable silyl group is independently a monovalent group of formula (II): (R²)ₘ(R³)₃₋ₘSi- (II); wherein subscript m is an integer of 1, 2, or 3; each R² is independently H, HO-, (C₁-C₆)alkoxy, (C₂-C₆)carboxy, ((C₁-C₆)alkyl)₂N-, (C₁-C₆)alkyl(H)C=NO-, or ((C₁-C₆)alkyl)₂C=NO-; and each R³ is independently (C₁-C₆)alkyl or phenyl; (ii) the polyolefin polyethylene based, poly(ethylene-*co*-(C₁-C₄₀)alpha-olefin)-based, or a combination thereof; or (iii) both (i) and (ii).

Aspect 6. The composition of any one of aspects 1 to 5 further comprising at least one additive selected from: (D) one or two second antioxidants, each having a structure different than formula (I) and each other; (E) at least one ethylene-based polymer; (F) a colorant; (G) a metal deactivator; (H) an (unsaturated carbon-carbon bond)-free hydrolyzable silane; (I) a corrosion inhibitor; and (J) a combination of any two or more of additives (D) to (I).

Aspect 7. A two-part formulation comprising first and second parts, wherein the first part consists essentially of (A) a (hydrolyzable silyl group)-functional polyolefin prepolymer; wherein the second part consists essentially of (B) an acidic condensation catalyst and (C) a secondary diarylamine of formula (I): (R¹-Ar)₂NH (I), wherein each Ar is benzene-1,4-diyl or both Ar are bonded to each other and taken together with the NH of formula (I) constitute a carbazol-3,6-diyl; and each R¹ is independently (C₁-C₂₀)hydrocarbyl; wherein constituent (C) secondary diamine of formula (I) is from > 0.200 weight percent (wt%) to 0.500 wt% based on total weight of the two-part formulation.

Aspect 8. The two-part formulation of aspect 7 wherein the second part further consists essentially of at least one additive selected from: D) one or two second antioxidants, each having a structure different than formula (I) and each other; (E) at least one ethylene-based polymer; (F) a colorant; (G) a metal deactivator; (H) an (unsaturated carbon-carbon bond)-free hydrolyzable silane; (I) a corrosion inhibitor; and (J) a combination of any two or more of additives (D) to (I).

Aspect 9. A method of making a moisture-curable polyolefin composition, the method comprising contacting a first part that consists essentially of the constituent (A) of aspect 1 or 5 with a second part that consists essentially of the constituent (B) of aspect 1, 2, or 3 and constituent (C) of aspect 1 or 4, and optionally the at least one additive of aspect 6, so as to give the composition.

Aspect 10. A moisture-cured polyolefin composition that is a product of moisture curing the moisture curable polyolefin composition of any one of aspects 1 to 6, or the composition made by the method of aspect 9, to give the moisture-cured polyolefin composition.

Aspect 11. A manufactured article comprising a shaped form of the composition of any one of aspects 1 to 6 or the composition made by the method of aspect 9.

Aspect 12. A coated conductor comprising a conductive core and a polymeric layer at least partially surrounding the conductive core, wherein at least a portion of the polymeric layer comprises or is prepared from the composition of any one of aspects 1 to 6 or the composition made by the method of aspect 9.

Aspect 13. A method of conducting electricity, the method comprising applying a voltage across the conductive core of the coated conductor of aspect 12 so as to generate a flow of electricity through the conductive core.

Moisture-curable polyolefin composition. The total weight of all constituents and additives in the moisture-curable polyolefin composition is 100.00 wt%. The moisture-curable polyolefin composition may further comprise water.

Constituent (A) (hydrolyzable silyl group)-functional polyolefin prepolymer. The polyolefin of constituent (A) may be polyethylene based, which means that the prepolymer has a backbone formed by polymerization of ethylene or ethylene and another polymerizable olefin. Constituent (A) may be a reactor copolymer of ethylene and an alkenyl-functional hydrolyzable silane. The alkenyl-functional hydrolyzable silane may be of formula (III) (R²)ₘ(R³)₃₋ₘSi-(C₂-C₆)alkenyl (III), wherein m, R², and R³ are as defined above for formula (II). The (C₂-C₆)alkenyl may be vinyl, allyl, 3-butenyl, or 5-hexenyl. In some aspects the constituent (A) is a reactor copolymer of ethylene and vinyltrimethoxysilane. Vinyltrimethoxysilane is an example of the alkenyl-functional hydrolyzable silane of formula (III) wherein subscript m is 3, each R² is a (C₁-C₆)alkoxy, specifically methoxy; and the (C₂-C₆)alkenyl is vinyl (-C(H)=CH₂). Alternatively, constituent (A) may be a reactor copolymer of ethylene, an alpha-olefin, and the alkenyl-functional hydrolyzable silane, such as in US 6,936,671. Alternatively, constituent (A) may be a homopolymer of ethylene having a carbon atom backbone having the hydrolyzable silyl groups grafted thereonto, such as a polymer made by a process (e.g., a SIOPLAS^{™} process) comprising reactively grafting a hydrolyzable unsaturated silane (e.g., vinyltrimethoxysilane) in a post-polymerization compounding or extruding step, typically facilitated by a free radical initiator such as a dialkyl peroxide, and isolating the resulting silane-grafted polymer. The grafted polymer may be for used in a subsequent fabricating step. Alternatively, constituent (A) may be a copolymer of ethylene and one or more of (C₃-C₄₀)alpha-olefins and unsaturated carboxylic esters (e.g., (meth)acrylate alkyl esters), wherein the copolymer has a backbone having the hydrolyzable silyl groups grafted thereonto, such as made by a SIOPLAS^{™} process. Alternatively, constituent (A) may be a mixture of ethylene, a hydrolyzable silane such as the alkenyl-functional hydrolyzable silane of formula (III), and a peroxide suitable for use in a a process (e.g., a MONOSIL^{™} process) comprising reactively grafting a hydrolyzable unsaturated silane (e.g., vinyltrimethoxysilane) in a post-polymerization compounding or extruding step, typically facilitated by a free radical initiator such as a dialkyl peroxide, and using the resulting silane-grafted polymer immediately (without isolation) in a subsequent fabricating step. Alternatively, constituent (A) may be a mixture of a copolymer of ethylene and one or more of (C₃-C₄₀)alpha-olefins and unsaturated carboxylic esters, a hydrolyzable silane such as the alkenyl-functional hydrolyzable silane of formula (III), and a peroxide, suitable for use in a SIOPLAS^{™} or MONOSIL^{™} process. The alpha-olefin may be a (C₃-C₄₀)alpha-olefin, alternatively a (C₃-C₂₀)alpha-olefin, alternatively a (C₃-C₁₀)alpha-olefin. The alpha-olefin may have at least four carbon atoms (i.e., be a (C₄)alpha-olefin or larger). Examples of the (C₃-C₁₀)alpha-olefin are propylene, 1-butene, 1-hexene, 1-octene, and 1-decene. The peroxide may be an organic peroxide such as described in WO 2015/149634 A1, page 5, line 6, to page 6, line 2. The organic peroxide, when present, may be used at a concentration of from 0.02 to 2 wt%, alternatively 0.04 to 2 wt%, alternatively 0.04 to 1 wt%, alternatively 0.04 to 0.08 wt%, based on total weight of the moisture-curable polyolefin composition. Constituent (A) may be present in the moisture-curable polyolefin composition at a concentration from 40 to 99.78 wt%, alternatively at least 50 wt%, alternatively at least 60 wt%; and alternatively at most 99 wt%, alternatively at most 95 wt%, alternatively at most 80 wt%; all based on total weight of the moisture-curable polyolefin composition.

Constituent (B) acidic condensation catalyst. The (B) acidic condensation catalyst is suitable for condensation curing the hydrolyzable silyl groups of the (A) (hydrolyzable silyl group)-functional polyolefin prepolymer. Although (B) may be a Lewis acid, typically (B) is a Bronsted acid. Constituent (B) may be present in the moisture-curable polyolefin composition at a concentration from 0.01 to 0.50 wt%, alternatively at least 0.05 wt%, alternatively at least 0.10 wt%; and alternatively at most 0.3 wt%, alternatively at most 0.2 wt%; all based on total weight of the moisture-curable polyolefin composition. In some aspects (B) is the organosulfonic acid. Examples of suitable organosulfonic acids are 4-methylphenylsulfonic acid, dodecylbenzenesulfonic acid, alkylnaphthylsulfonic acids, and organosulfonic acids in WO 2006/017391; EP 0736065; and US 6441097.

Constituent (C) secondary diarylamine of formula (I): (R¹-Ar)₂NH (I), wherein Ar and R¹ are as defined above in aspect 1 or 2. The (C) secondary diamine of formula (I) may be at least 0.220 wt%, alternatively at least 0.250 wt%, alternatively at least 0.300 wt%; and at most 0.500 wt%, alternatively at most 0.45 wt%, alternatively at most 0.40 wt%; all based on total weight of the moisture-curable polyolefin composition. Examples of suitable constituent (C) are 3,6-dibenzylcarbazole; bis(4-benzylphenyl)amine, bis(4-(1-phenylethyl)phenyl)amine, and bis(4-(1-methyl-1-phenylethyl)phenyl)amine. In some aspects of the moisture-curable polyolefin composition, the concentration of constituent (C) is greater than, alternatively at least 1.1 times (1.1 x) greater than, alternatively at least 1.2 x greater than, alternatively at least 1.3 x greater than the concentration of constituent (B). In such aspects of the moisture-curable polyolefin composition, the concentration of constituent (C) is less than 1.6 x, alternatively less than 1.5x, alternatively less than 1.4x the concentration of constituent (B).

Each additive is independently optional. In some aspects the moisture-curable polyolefin composition consists essentially of constituents (A) to (C), alternatively consists of constituents (A) to (C). In other aspects the moisture-curable polyolefin composition further comprises at least 1 additive, alternatively at least 2 additives, alternatively at least 4 additives, alternatively at least 6 additives; and alternatively at most 15 additives, alternatively at most 12 additives, alternatively at most 10 additives. The moisture-curable polyolefin composition may comprise constituents (A) to (C) and additive (D); alternatively constituents (A) to (C) and additive (E); alternatively constituents (A) to (C) and additive (F); alternatively constituents (A) to (C) and additive (G); alternatively constituents (A) to (C) and additive (H); alternatively constituents (A) to (C) and additive (I); alternatively constituents (A) to (C) and additives (D, (E), (G) and (H); alternatively constituents (A) to (C) and additives (D) to (H).

Additive (D) one or two second antioxidants, each having a structure different than formula (I) and each other. In some aspects additive (D) is 1 second antioxidant. In other aspects additive (D) is two second antioxidants. Examples of suitable second antioxidants are polymerized 1,2-dihydro-2,2,4-trimethylquinoline (Agerite MA); tris(4-tert-butyl-3-hydroxy-2,6-dimethylbenzyl)-s-triazine-2,4,6-(1H,3H,5H)trione (Cyanox 1790); distearyl-3,3-thiodiproprionate (DSTDP); tetrakismethylene (3,5-di-tert-butyl-4-hydroxyhydrocinnamate) methane (Irganox 1010); 1,2-bis(3,5-di-tert-butyl-4-hydroxyhydrocinnamoyl)hydrazine (Irganox 1024); bis(4,6-dimethylphenyl)isobutylidene (Lowinox 22IB46); and 4,4-thiobis(2-tert-butyl-5-methylphenol) (TBM6).

Additive (E) an ethylene-based polymer. Additive (E) lacks (is free of) covalently bound hydrolyzable silyl groups. In some aspects (E) is a polyethylene; an ethylene-ethyl acrylate copolymer. E.g., DPDA-6182 from The Dow Chemical Company; a low density polyethylene (LDPE) such as a linear low density polyethylene (LLDPE); or a poly(ethylene-*co*-(C₃-C₄₀)alpha-olefin) copolymer. Additive (E) may be characterized as elastomeric or non-elastomeric; and thermoplastic or thermoset. Suitable examples of additive (E) are the ethylene-based polymers described in WO 2015/149634 A1, page 2, line 1, to page 5, line 5. Additive (E) may be useful as a matrix material. The additive (E) may be used at a concentration of from 1 to 20 wt%, alternatively 2 to 18 wt%, alternatively 3 to 15 wt%, based on total weight of the moisture-curable polyolefin composition.

Additive (F) a colorant. E.g., a pigment or dye. E.g., carbon black or titanium dioxide. The carbon black may be provided as a carbon black masterbatch that is a formulation of poly(1-butene-*co*-ethylene) copolymer (from ≥ 95 wt% to < 100 wt% of the total weight of the masterbatch) and carbon black (from > 0 wt% to ≤ 5 wt% of the total weight of the masterbatch. The (F) colorant may be from 0.1 to 35 wt%, alternatively 1 to 10 wt%, based on total weight of the moisture-curable polyolefin composition.

Additive (G) a metal deactivator. E.g., oxaylyl bis(benzylidene hydrazide) (OABH). Additive (G) may be from 0.001 to 0.2 wt%, alternatively 0.01 to 0.15 wt%, alternatively 0.01 to 0.10 wt%, all based on total weight of the moisture-curable polyolefin composition.

Additive (H) (unsaturated carbon-carbon bond)-free hydrolyzable silane. Additive (H) may be any monosilane containing at least 1, alternatively at least 2, alternatively at least 3, alternatively 4 hydrolyzable groups (e.g., R² as defined above); and at most 3, alternatively at most 2, alternatively at most 1, alternatively 0 non-hydrolyzable (unsaturated carbon-carbon bond)-free groups such as alkyl or aryl groups. Examples of (H) are acetoxytrimethylsilane, 4-benzylphenylsulfonoxytributylsilane, dimethylamino-methoxy-dioctylsilane, octyltrimethoxysilane, and tetramethoxysilane. Additive (H) may be from 0.1 to 2 wt%, alternatively 0.1 to 1.5 wt%, alternatively 0.1 to 1.0 wt%; all based on total weight of the moisture-curable polyolefin composition.

Additive (I) a corrosion inhibitor. E.g., tin (II) sulfate. Additive (I) may be from 0.00001 to 0.1 wt%, alternatively 0.0001 to 0.01 wt%, based on total weight of the moisture-curable polyolefin composition.

Additives (J) a combination of any two or more of additives (D) to (I).

The moisture-curable polyolefin composition may further comprise other additives selected from a lubricant, an anti-blocking agent, a flame retardant, and a processing aid.

The composition may be referred to as an unfilled composition when additives are absent therefrom. The composition may be referred to as a filled composition when the composition further comprises at least one of the foregoing additives. Embodiments of the unfilled composition may be made by any suitable means. For example, embodiments of the unfilled composition that contain constituents (A) and (B), and optionally constituent (C), (but typically not additives) may be made in a Brabender batch mixer by blending the constituents for 3 minutes at 180° C. melt temperature using cam blades at 30 revolutions per minute (rpm) to give an unfilled melt mixture, and then allowing the unfilled melt mixture to cool to give the embodiments of the unfilled composition.

Embodiments of the filled composition may also be made by any suitable means. For example, embodiments of the filled compositions containing constituents (A), (B), and additive (I) (unsaturated carbon-carbon bond)-free hydrolyzable silane, and optionally constituent (C), may be made in a Brabender batch mixer using a 180° C. melt temperature by first adding the constituents (A) and (B), and constituent (C), if any, into the mixer. Once the constituents (A) and (B), and any constituent (C), has started melting, then add one or more of additives(s) (D) one or two second antioxidants, followed by any other additives (E), (F), (G), (H), and/or (I), at flux to give a filled melt mixture. Then homogenize the filled melt mixture for about 3 minutes, and allow the filled melt mixture to cool to give the embodiments of the filled composition.

Test samples of embodiments of unfilled and filled compositions may be separately made into compression molded plaques. The mechanical properties of these compositions may be characterized using test samples cut from the compression molded plaques.

Any compound herein includes all its isotopic forms, including natural abundance forms and/or isotopically-enriched forms. The isotopically-enriched forms may have additional uses, such as medical or anti-counterfeiting applications, wherein detection of the isotopically-enriched form is helpful in treatment or investigation.

Unless otherwise defined herein, named general terms have the following meanings. Alternatively precedes a distinct embodiment. Articles "a", "an", and "the" each refer to one or more. ASTM means the standards organization, ASTM International, West Conshohocken, Pennsylvania, USA. IEC means the standards organization, International Electrotechnical Commission, Geneva, Switzerland. Any comparative example is used for illustration purposes only and shall not be prior art. Free of or lacks means a complete absence of; alternatively not detectable. IUPAC is International Union of Pure and Applied Chemistry (IUPAC Secretariat, Research Triangle Park, North Carolina, USA). A Markush group of members A and B may be equivalently expressed as: "a member selected from A and B"; "a member selected from the group consisting of A and B"; or "a member A or B". Each member may independently be a subgenus or species of the genus. May confers a permitted choice, not an imperative. Operative means functionally capable or effective. Optional(ly) means is absent (or excluded), alternatively is present (or included). Properties are measured using a standard test method and conditions for the measuring (e.g., viscosity: 23° C and 101.3 kPa). Ranges include endpoints, subranges, and whole and/or fractional values subsumed therein, except a range of integers does not include fractional values. Room temperature is 23° C. ± 1° C. unless indicated otherwise. Substituted when referring to a compound means having, in place of hydrogen, one or more substituents, up to and including per substitution.

Advantageously we discovered that the moisture-curable polyolefin composition cures to give the moisture-cured polyolefin composition. The moisture-cured polyolefin composition has satisfactory extent of crosslinking and has good heat aging performance under several different test conditions. Also, the moisture-cured polyolefin composition has good mechanical properties such as tensile strength and elongation-at-break. These characteristics make the moisture-cured polyolefin composition useful in a variety of applications including as a component of a coating of a coated conductor such as a coated wire or coated cable. We could not have predicted these beneficial results from BRISCOGLIO. We were pleasantly surprised to discover these results despite using the (C) secondary diarylamine of formula (I) at a concentration of from 0.220 wt% to 0.500 wt%, alternatively from 0.250 wt% to 0.50 wt%, alternatively from 0.220 wt% to 0.40 wt%; all based on total weight of the moisture-curable polyolefin composition.

Elongation-at-Break Test Method. Measured on 12.7 centimeter (cm) (5 inches) long, fully moisture-cured test samples, prepared according to the Moisture Curing Test Method described below, using an Instron machine and 25.4 cm per minute (10 inches per minute) according to IEC 60502, and expressed as a percent. Minimum value per IEC 60502 specifications is 200%.

Heat Aging Performance Test Method (HEPTM) 1: oxidative induction time (OIT). Measures the time required to initiate oxidation of a test sample of the moisture-cured polyolefin composition, prepared by the below Moisture Curing Test Method, under molecular oxygen when temperature is increased at a rate of 10° C. per minute in a differential scanning calorimeter (DSC). Record the time in minutes until oxidative induction is detected. Oxidative induction time is determined by heating a test sample up from 25° C. at a heating rate of 10° C./min., and observing the time of onset of oxidation by detecting the beginning of oxidation as an exothermic peak in differential scanning calorimetry (DSC). The longer the time in minutes for OIT, the more resistant to oxidative heat aging the test sample. HEPTM 1 is preferred over HEPTM 2 and 3 in assessing overall heat aging performance. In some aspects the moisture-cured polyolefin composition has an OIT according to HEPTM 1 of at least 40 minutes, alternatively at least 45 minutes, alternatively at least 60 minutes.

Heat Aging Performance Test Method (HEPTM) 2: heat aging without conductor. Place test sample of the moisture-cured polyolefin composition, prepared by the below Moisture Curing Test Method, in an oven at 135° C. for 168 hours according to IEC 60502. Remove the resulting heat-aged test sample from the oven, and allow it to cool for 16 hours at room temperature. Assess elongation-at-break and tensile strength of the heat-aged test samples according to their respective Test Methods described herein, and compare the results to elongation-at-break and tensile strength of the test samples prior to heat aging. If the difference in elongation-at-break and tensile strength of the heat-aged test sample is less than 25% of the elongation-at-break and tensile strength of the test sample prior to heat aging, the test sample passes HAPTM 2. If the difference is greater than 25%, the test sample fails HAPTM 2. In some aspects the moisture-cured polyolefin composition passes at least the tensile strength test, alternatively at least the elongation-at-break test, alternatively both (T&E) according to HEPTM 2.

Heat Aging Performance Test Method (HEPTM) 3: heating aging on copper conductor using Mandrel bend test. Heat age a coated conductor, prepared according to the Moisture Curing Test Method described below wherein the 14 AWG conductor is a copper wire, at 150° C. for 10 days, and allowing the heat aged coated conductors to cool to room temperature for 16 hours to give cooled, heat-aged coated conductors. IEC-60502-1 specifies that if after such heat aging it is difficult to remove the coating from the conductor without compromising it, then perform a Mandrel bend test. In the Mandrel bend test, wind the cooled, heat-aged coated conductors around a mandrel at a rate of 1 turn every 5 seconds. The diameter of the mandrel and number of turns are based on the thickness of the copper conductor, as specified by IEC-60502-1. If after winding there is no crack in the coating, the coated conductor passes this test. If there is cracking in the coating of the coated conductor after winding, the coated conductor fails. In some aspects the moisture-cured polyolefin composition passes the HEPTM 3.

Hot Creep Test Method. Measures extent of crosslinking, and thus extent of curing, in the test sample of the moisture-cured polyolefin composition prepared by the below Moisture Curing Test Method. Remove the moisture-cured polyolefin composition from the coated wires prepared by the Moisture Curing Test Method, measure its initial length, and subject the measured test sample to hot creep test conditions comprising a load of 20 Newtons per square meter (N/m²) at 200° C. for 15 minutes to give a tested sample. Remove the tested sample from the hot creep test conditions, cool and measure the length of the tested sample. Express the extent of elongation of the test sample as a percentage (%) of the length of the tested sample after hot creep conditions relative to the initial length of test sample prior to hot creep conditions. The lower the hot creep percent, the lower the extent of elongation of a test sample under load, and thus the greater the extent of crosslinking, and thus the greater the extent of curing. In some aspects the moisture-cured polyolefin composition has a hot creep according to Hot Creep Test Method of < 30%, alternatively ≤ 25%, alternatively ≤ 23%; and alternatively at least 15%, alternatively at least 16%, alternatively at least 18%.

Moisture Curing Test Method. Cures the moisture curable polyolefin composition. Moisture curing may be performed for testing purposes according to the following procedure. Prepare an aspect of the 2-part formulation containing 95 wt% or 91 wt% of Part 1 and 5 wt% or 9 wt%, respectively, of Part 2. Part 1 is a mixture of 99.5 wt% constituent (A) and soaked with 0.5 wt% additive (I): (A) (hydrolyzable silyl group)-functional polyolefin prepolymer that is a reactor copolymer of 98.5 wt% ethylene and 1.5 wt% vinyltrimethoxysilane and additive (I) is an (unsaturated carbon-carbon bond)-free hydrolyzable silane that is octyltrimethoxysilane. Part 2 is a masterbatch of constituents (B), (C), and, if present, one or more of additives (D) to (H). Combine Parts 1 and 2 in a wireline extruder to form 0.635 millimeter (mm) (25 mils) thick wall wires with 14 AWG conductors. Place the resulting coated wires in a water bath at 90° C. for three hours, and then remove the coated wires to give an aspect of the coated conductor having a coating comprising an aspect of the moisture-cured polyolefin composition.

Tensile Strength Test Method. Measured on 12.7 centimeters (cm) (5 inches) long, fully moisture-cured test samples, prepared according to the Moisture Curing Test Method described above, using an Instron machine and 25.4 cm per minute (10 inches per minute) according to IEC 60502, and expressed as kPa (pounds per square inch (psi)). Minimum value per IEC 60502 specifications is 12,000 kilopascals (kPa) (1,800 psi).

### EXAMPLES

Constituent (A1): reactor copolymer of 98.5 wt% ethylene and 1.5 wt% vinyltrimethoxysilane. Prepared by copolymerizing ethylene and vinyltrimethoxysilane in a tubular high pressure polyethylene reactor with a free radical initiator. It is available as DFDA-5451 from The Dow Chemical Company.
Constituent (B1): an alkyl-substituted naphthylsulfonic acid (Nacure CD-2180).
Constituent (C1): bis(4-(1-methyl-1-phenylethyl)phenyl)amine (Naugard 445).
Additive (D1): bis(4,6-dimethylphenyl)isobutylidene (Lowinox 22IB46).
Additive (D2): distearyl-3,3-thiodiproprionate (DSTDP).
Additive (E1): ethylene-ethyl acrylate copolymer (DPDA-6182).

Additive (E2): linear low density polyethylene (LLDPE). Obtained as product DFH-2065 from The Dow Chemical Company, Midland, Michigan, USA.

Additive (F1): carbon black masterbatch that is a formulation of poly(1-butene-*co-*ethylene) copolymer (from ≥ 95 wt% to < 100 wt% of the total weight of the masterbatch) and carbon black (from > 0 wt% to ≤ 5 wt% of the total weight of the masterbatch.
Additive (G1): oxaylyl bis(benzylidene hydrazide) (OABH).
Additive (H1): octyltrimethoxysilane.

Inventive Example (IE) 1A: moisture-curable polyolefin composition containing 0.22 wt% additive (C1). Prepare a 2-part formulation containing 95.01 wt% of Part 1 and 4.99 wt% of Part 2. Part 1 is a mixture of 94.53 parts of (A1) soaked with a 0.48 part of (H1). Part 2 is a masterbatch of 0.16 part of (B1), 0.22 part of (C1), 2.28 parts of (E1), 2.28 parts of (E2), and 0.04 part of (G1). Total is 100 parts. Combine Parts 1 and 2 in a wireline extruder to give the composition of IE1A, which does not contain (D1), (D2), or (F1). Extrude composition to form 0.635 millimeter (mm) (25 mils) thick wall wires with 14 AWG conductors.

IE1B: moisture-cured polyolefin composition. Place the resulting coated wires of IE1A in a water bath at 90° C. for three hours, and then remove the coated wires and allow them to cool for 16 hours to room temperature to give moisture-cured polyolefin composition of IE1B.

IE 2A: moisture-curable polyolefin composition containing 0.40 wt% (C1). Prepare a 2-part formulation containing 90.00 wt% of Part 1 and 10.00 wt% of Part 2. Part 1 is a mixture of 89.55 parts of (A1) soaked with a 0.45 part of (H1). Part 2 is a masterbatch of 0.29 part of (B1), 0.40 part of (C1), 4.10 parts of (E1), 4.10 parts of (E2), 1.00 part (F1), and 0.07 part of (G1). Total is 100 parts. Combine Parts 1 and 2 in a wireline extruder to give the composition of IE2A, which does not contain (D1) or (D2). Extrude composition to form 0.635 millimeter (mm) (25 mils) thick wall wires with 14 AWG conductors.

IE2B: moisture-cured polyolefin composition. Place the resulting coated wires of IE2A in a water bath at 90° C. for three hours, and then remove the coated wires and allow them to cool for 16 hours to room temperature to give moisture-cured polyolefin composition of IE2B.

IE 3A: moisture-curable polyolefin composition containing 0.31 wt% (C1). Prepare a 2-part formulation containing 89.98 wt% of Part 1 and 10.02 wt% of Part 2. Part 1 is a mixture of 89.55 parts of (A1) soaked with a 0.43 part of (H1). Part 2 is a masterbatch of 0.36 part of (B1), 0.31 part of (C1), 0.09 part of (D1), 0.09 part of (D2), 4.03 parts of (E1), 4.03 parts of (E2), 1.00 part (F1), and 0.07 part of (G1). Total is 100 parts. Combine Parts 1 and 2 in a wireline extruder to give the composition of IE3A. Extrude composition to form 0.635 millimeter (mm) (25 mils) thick wall wires with 14 AWG conductors.

IE3B: moisture-cured polyolefin composition. Place the resulting coated wires of IE2A in a water bath at 90° C. for three hours, and then remove the coated wires and allow them to cool for 16 hours to room temperature to give moisture-cured polyolefin composition of IE3B.

Test samples of the moisture-cured polyolefin compositions of IE1B, IE2B, and IE3B according to the Hot Creep Test Method report as percentage ("Hot Creep (%)"), the Heat Aging Performance Test Method (HEPTM) 1: oxidative induction time reported in minutes ("OIT (min.)"), the Heat Aging Performance Test Method (HEPTM) 3: heating aging on copper conductor using Mandrel bend test reported as pass or fail ("Mandrel (P/F)"), and a combination of the Elongation-at Break Test Method and Tensile Strength Test Method reported as pass or fail ("T&E (P/F)"). Results are reported below in Table 1.

**Table 1: Compositions and Characterizations of IE1B, IE2B, and IE3B.**

| Ex. No. | IE1B | IE2B | IE3B |
|---|---|---|---|
| (A1) | 94.53 wt% | 89.55 wt% | 89.55 wt% |
| (B1) | 0.16 wt% | 0.29 wt% | 0.36 wt% |
| (C1) | 0.22 wt% | 0.40 wt% | 0.31 wt% |
| (D1) | None | None | 0.09 wt% |
| (D2) | None | None | 0.09 wt% |
| (E1) | 2.28 wt% | 4.10 wt% | 4.03 wt% |
| (E2) | 2.28 wt% | 4.10 wt% | 4.03 wt% |
| (F1) | None | 1.00 | 1.00 |
| (G1) | 0.04 wt% | 0.07 wt% | 0.07 wt% |
| (H1) | 0.48 wt% | 0.45 wt% | 0.43 wt% |
| Hot Creep (%) | 18.2 | 22.0 | 21.6 |
| OIT (min.) | 50.3 | 49.3 | 68.2 |
| T&E (P/F) | Pass | Pass | Pass |
| Mandrel (P/F) | Pass | Pass | Pass |

Hot Creep (%) data in Table 1 show that the moisture-curable polyolefin compositions of IE1A, IE2A, and IE3A cured to give moisture-cured polyolefin compositions despite the former having 0.22 wt% or higher concentration of constituent (C), and also show that the moisture-cured polyolefin compositions have sufficient extent of crosslinking such that Hot Creep was < 25%. The OIT (min.) data in Table 1 show that the moisture-cured polyolefin compositions were resistant to heat aging such that they had oxidation induction times of greater than 40 minutes and passed the Heat Aging Performance Test Method 1 (OIT). The T&E (P/F) data in Table 1 show that the moisture-cured polyolefin compositions are resistant to heat aging such that they passed the Heat Aging Performance Test Method (HEPTM) 2: heat aging without conductor. The Mandrel (P/F) data in Table 1 show that the moisture-cured polyolefin compositions are resistant to heat aging such that they passed the Heat Aging Performance Test Method (HEPTM) 3: heating aging on copper conductor using Mandrel bend test.

The moisture-curable polyolefin composition unpredictably cures to give the moisture-cured polyolefin composition. The moisture-cured polyolefin composition has satisfactory extent of crosslinking and good heat aging performance under several different test conditions. Also, the moisture-cured polyolefin composition has good mechanical properties such as tensile strength and elongation-at-break. These characteristics make the moisture-cured polyolefin composition useful in a variety of applications including as a component of a coating of a coated conductor such as a coated wire or coated cable.

## Claims

1. A moisture-curable polyolefin composition comprising constituents (A) to (C): (A) a (hydrolyzable silyl group)-functional polyolefin prepolymer, (B) an acidic condensation catalyst, and (C) a secondary diarylamine of formula (I): (R¹-Ar)₂NH (I), wherein each Ar is benzene-1,4-diyl or both Ar are bonded to each other and taken together with the NH of formula (I) constitute a carbazol-3,6-diyl; and each R¹ is independently (C₁-C₂₀)hydrocarbyl; wherein constituent (C) secondary diamine of formula (I) is from > 0.200 weight percent (wt%) to 0.500 wt% based on total weight of the moisture-curable polyolefin composition.

2. The composition of claim 1 wherein in the (C) secondary diarylamine of formula (I): (i) each Ar is benzene-1,4-diyl; (ii) both Ar are bonded to each other and taken together with the NH of formula (I) constitute a carbazol-3,6-diyl; (iii) each R¹ is independently (C₁-C₁₀)hydrocarbyl; (iv) each R¹ is independently (C₇-C₂₀)hydrocarbyl; (v) each R¹ is independently benzyl, 1-phenylethyl, or 1-methyl-1-phenylethyl; (vi) 1-methyl-1-phenylethyl; (vii) both (i) and any one of (iii) to (vi); or (viii) both (ii) and any one of (iii) to (vi).

3. The composition of claim 1 or 2 wherein the (C) secondary diamine of formula (I) is: (i) from 0.220 wt% to 0.500 wt%, (ii) from 0.250 wt% to 0.50 wt%, or (iii) from 0.220 wt% to 0.40 wt%; all based on total weight of the moisture-curable polyolefin composition.

4. The composition of any one of claims 1 to 3 wherein the (B) acidic condensation catalyst is (i) an organosulfonic acid, an organophosphonic acid, or a hydrogen halide; (ii) an organosulfonic acid; (iii) an alkyl-substituted arylsulfonic acid; (iv) an alkyl-substituted arylsulfonic acid wherein there is/are 1 or 2 (C₅-C₂₀)alkyl substituent(s) and 1 aryl group that is phenyl or naphthyl; (v) a (C₁-C₅)alkylphosphonic acid, wherein the (C₁-C₅)alkyl is unsubstituted or substituted with one -NH₂ group; (vi) HF, HCl, or HBr; (vii) a combination of any two or more of (i) to (vi).

5. The composition of any one of claims 1 to 4 wherein in the (A) (hydrolyzable silyl group)-functional polyolefin prepolymer: (i) each hydrolyzable silyl group is independently a monovalent group of formula (II): (R²)ₘ(R³)₃₋ₘSi- (II); wherein subscript m is an integer of 1, 2, or 3; each R² is independently H, HO-, (C₁-C₆)alkoxy, (C₂-C₆)carboxy, ((C₁-C₆)alkyl)₂N-, (C₁-C₆)alkyl(H)C=NO-, or ((C₁-C₆)alkyl)₂C=NO-; and each R³ is independently (C₁-C₆)alkyl or phenyl; (ii) the polyolefin is polyethylene based, poly(ethylene-*co*-(C₁-C₄₀)alpha-olefin)-based, or a combination thereof; or (iii) both (i) and (ii).

6. The composition of any one of claims 1 to 5 further comprising at least one additive selected from: (D) one or two second antioxidants, each having a structure different than formula (I) and each other; (E) at least one ethylene-based polymer; (F) a colorant; (G) a metal deactivator; (H) an (unsaturated carbon-carbon bond)-free hydrolyzable silane; (I) a corrosion inhibitor; and (J) a combination of any two or more of additives (D) to (I).

7. A two-part formulation comprising first and second parts, wherein the first part consists essentially of (A) a (hydrolyzable silyl group)-functional polyolefin prepolymer; wherein the second part consists essentially of (B) an acidic condensation catalyst and (C) a secondary diarylamine of formula (I): (R¹-Ar)₂NH (I), wherein each Ar is benzene-1,4-diyl or both Ar are bonded to each other and taken together with the NH of formula (I) constitute a carbazol-3,6-diyl; and each R¹ is independently (C₁-C₂₀)hydrocarbyl; wherein constituent (C) secondary diamine of formula (I) is from > 0.200 weight percent (wt%) to 0.500 wt% based on total weight of the two-part formulation.

8. The two-part formulation of claim 7 wherein the second part further consists essentially of at least one additive selected from: D) one or two second antioxidants, each having a structure different than formula (I) and each other; (E) at least one ethylene-based polymer; (F) a colorant; (G) a metal deactivator; (H) an (unsaturated carbon-carbon bond)-free hydrolyzable silane; (I) a corrosion inhibitor; and (J) a combination of any two or more of additives (D) to (I).

9. A method of making a moisture-curable polyolefin composition, the method comprising contacting a first part that consists essentially of the constituent (A) of claim 1 or 5 with a second part that consists essentially of the constituent (B) of claim 1, 2, or 3 and constituent (C) of claim 1 or 4, and optionally the at least one additive of claim 6, so as to give the composition.

10. A moisture-cured polyolefin composition that is a product of moisture curing the moisture curable polyolefin composition of any one of claims 1 to 6, or the composition made by the method of claim 9, to give the moisture-cured polyolefin composition.

11. A manufactured article comprising a shaped form of the composition of any one of claims 1 to 6 or the composition made by the method of claim 9.

12. A coated conductor comprising a conductive core and a polymeric layer at least partially surrounding the conductive core, wherein at least a portion of the polymeric layer comprises or is prepared from the composition of any one of claims 1 to 6 or the composition made by the method of claim 9.

13. A method of conducting electricity, the method comprising applying a voltage across the conductive core of the coated conductor of claim 12 so as to generate a flow of electricity through the conductive core.

## Patentansprüche

1. Feuchtigkeitshärtbare Polyolefinzusammensetzung, umfassend die Bestandteile (A) bis (C): (A) ein (hydrolysierbare Silylgruppe)-funktionelles Polyolefinpräpolymer, (B) einen sauren Kondensationskatalysator und (C) ein sekundäres Diarylamin von Formel (I): (R¹-Ar)₂NH (I), wobei jedes Ar Benzol-1,4-diyl ist oder beide Ar aneinander gebunden sind und mit dem NH der Formel (I) zusammengenommen ein Carbazol-3,6-diyl bilden; und jedes R¹ unabhängig voneinander (C₁-C₂₀)-Kohlenwasserstoff ist; wobei Bestandteil (C) sekundäres Diamin der Formel (I) von > 0,200 Gewichtsprozent (Gew.-%) bis 0,500 Gew.-% bezogen auf das Gesamtgewicht der feuchtigkeitshärtbaren Polyolefinzusammensetzung ist.

2. Zusammensetzung nach Anspruch 1, wobei in dem (C) sekundären Diarylamin der Formel (I): (i) jedes Ar Benzol-1,4-diyl ist; (ii) beide Ar aneinander gebunden sind und mit dem NH der Formel (I) zusammengenommen ein Carbazol-3,6-diyl bilden; (iii) jedes R¹ unabhängig voneinander (C₁-C₁₀)-Kohlenwasserstoff ist; (iv) jedes R¹ unabhängig voneinander (C₇-C₂₀)-Kohlenwasserstoff ist; (v) jedes R¹ unabhängig voneinander Benzyl, 1-Phenylethyl oder 1-Methyl-1-phenylethyl ist; (vi) 1-Methyl-1-phenylethyl; (vii) sowohl (i) als auch ein beliebiges von (iii) bis (vi); oder (viii) sowohl (ii) als auch ein beliebiges von (iii) bis (vi).

3. Zusammensetzung nach Anspruch 1 oder 2, wobei das (C) sekundäre Diamin der Formel (I) ist: (i) von 0,220 Gew.-% bis 0,500 Gew.-%, (ii) von 0,250 Gew.-% bis 0,50 Gew.-% oder (iii) von 0,220 Gew.-% bis 0,40 Gew.-%; alle bezogen auf das Gesamtgewicht der feuchtigkeitshärtbaren Polyolefinzusammensetzung.

4. Zusammensetzung nach einem der Ansprüche 1 bis 3, wobei der (B) saure Kondensationskatalysator ist: (i) eine Organosulfonsäure, eine Organophosphonsäure oder ein Halogenwasserstoff; (ii) eine Organosulfonsäure; (iii) eine alkylsubstituierte Arylsulfonsäure; (iv) eine alkylsubstituierte Arylsulfonsäure, wobei 1 oder 2 (C₅-C₂₀)-Alkylsubstituent(en) und 1 Arylgruppe, die Phenyl oder Naphthyl ist, vorhanden ist/sind; (v) eine (C₁-C₅)-Alkylphosphonsäure, wobei das (C₁-C₅)-Alkyl unsubstituiert oder mit einer -NH₂-Gruppe substituiert ist; (vi) HF, HCl oder HBr; und (vii) eine Kombination von beliebigen zwei oder mehr von (i) bis (vi).

5. Zusammensetzung nach einem der Ansprüche 1 bis 4, wobei in dem (A) (hydrolysierbare Silylgruppe)-funktionellen Polyolefinpräpolymer: (i) jede hydrolysierbare Silylgruppe unabhängig voneinander eine einwertige Gruppe von Formel (II) ist: (R²)ₘ(R³)₃₋ₘSi- (II); wobei das tiefgestellte m eine ganze Zahl von 1, 2 oder 3 ist; jedes R² unabhängig voneinander H, HO-, (C₁-C₆)-Alkoxy, (C₂-C₆)-Carboxy, ((C₁-C₆)-Alkyl)₂N-, (C₁-C₆)-Alkyl(H)C=NO-, oder ((C₁-C₆)-Alkyl)₂C=NO- ist; und jedes R³ unabhängig voneinander (C₁-C₆)-Alkyl oder Phenyl ist; (ii) das Polyolefin auf Polyethylenbasis, auf Poly(ethylen-*co*-(C₁-C₄₀)-alpha-olefin)-Basis oder eine Kombination davon ist; oder (iii) sowohl (i) als auch (ii).

6. Zusammensetzung nach einem der Ansprüche 1 bis 5, ferner umfassend mindestens einen Zusatz, der ausgewählt ist aus: (D) einem oder zwei zweiten Antioxidantien, die jeweils eine Struktur aufweisen, die sich von der Formel (I) und voneinander unterscheidet; (E) mindestens einem Polymer auf Ethylenbasis; (F) einem Farbstoff; (G) einem Metalldeaktivator; (H) einem (ungesättigte Kohlenstoff-Kohlenstoff-Bindung)-freien hydrolysierbaren Silan; (I) einem Korrosionsinhibitor; und (J) einer Kombination von beliebigen zwei oder mehr Zusätzen von (D) bis (I).

7. Zweiteilige Formulierung, umfassend einen ersten und einen zweiten Teil, wobei der erste Teil im Wesentlichen aus (A) einem (hydrolysierbare Silylgruppe)-funktionellen Polyolefinpräpolymer besteht; wobei der zweite Teil im Wesentlichen aus (B) einem sauren Kondensationskatalysator und (C) einem sekundären Diarylamin der Formel (I) besteht: (R¹-Ar)₂NH (I), wobei jedes Ar Benzol-1,4-diyl ist oder beide Ar aneinander gebunden sind und mit dem NH der Formel (I) zusammengenommen ein Carbazol-3,6-diyl bilden; und jedes R¹ unabhängig voneinander (C₁-C₂₀)-Kohlenwasserstoff ist; wobei Bestandteil (C) sekundäres Diamin der Formel (I) von > 0,200 Gewichtsprozent (Gew.-%) bis 0,500 Gew.-% bezogen auf das Gesamtgewicht der zweiteiligen Formulierung ist.

8. Zweiteilige Formulierung nach Anspruch 7, wobei der zweite Teil ferner im Wesentlichen aus mindestens einem Zusatz besteht, der ausgewählt ist aus: D) einem oder zwei zweiten Antioxidantien, die jeweils eine Struktur aufweisen, die sich von der Formel (I) und voneinander unterscheidet; (E) mindestens einem Polymer auf Ethylenbasis; (F) einem Farbstoff; (G) einem Metalldeaktivator; (H) einem (ungesättigte Kohlenstoff-Kohlenstoff-Bindung)-freien hydrolysierbaren Silan; (I) einem Korrosionsinhibitor; und (J) einer Kombination von beliebigen zwei oder mehr Zusätzen von (D) bis (I).

9. Verfahren zum Herstellen einer feuchtigkeitshärtbaren Polyolefinzusammensetzung, das Verfahren umfassend ein Inberührungbringen eines ersten Teils, der im Wesentlichen aus dem Bestandteil (A) nach Anspruch 1 oder 5 besteht, mit einem zweiten Teil, der im Wesentlichen aus dem Bestandteil (B) nach Anspruch 1, 2 oder 3 und Bestandteil (C) nach Anspruch 1 oder 4 und optional dem mindestens einen Zusatz nach Anspruch 6 besteht, um die Zusammensetzung zu ergeben.

10. Feuchtigkeitsgehärtete Polyolefinzusammensetzung, die ein Produkt einer Feuchtigkeitshärtung der feuchtigkeitshärtbaren Polyolefinzusammensetzung nach einem der Ansprüche 1 bis 6 oder der Zusammensetzung ist, die durch das Verfahren nach Anspruch 9 hergestellt wird, um die feuchtigkeitsgehärtete Polyolefinzusammensetzung zu ergeben.

11. Gefertigtes Erzeugnis, umfassend eine gestaltete Form der Zusammensetzung nach einem der Ansprüche 1 bis 6 oder die Zusammensetzung, die durch das Verfahren nach Anspruch 9 hergestellt wird.

12. Beschichteter Leiter, umfassend einen leitenden Kern und eine polymere Schicht, die den leitenden Kern mindestens teilweise umgibt, wobei mindestens ein Abschnitt der polymeren Schicht die Zusammensetzung nach einem der Ansprüche 1 bis 6 oder die Zusammensetzung, die durch das Verfahren nach Anspruch 9 hergestellt wird, umfasst oder daraus zubereitet ist.

13. Verfahren zum Leiten von Elektrizität, das Verfahren umfassend ein Anlegen einer Spannung über den leitfähigen Kern des beschichteten Leiters nach Anspruch 12, um einen Fluss von Elektrizität durch den leitfähigen Kern zu generieren.

## Revendications

1. Composition de polyoléfine durcissable à l'humidité comprenant des constituants (A) à (C) : (A) un prépolymère de polyoléfine à fonction de (groupe silyle hydrolysable), (B) un catalyseur de condensation acide, et (C) une diarrhée secondaire de formule (I) : (R¹-Ar)₂NH (I), dans laquelle chaque Ar est benzène-1,4-diyle ou les deux Ar sont liés l'un à l'autre et pris conjointement constituent avec le NH de formule (I) un carbazol-3,6-diyle ; et chaque R¹ est indépendamment l'hydrocarbyle en (C₁ à C₂₀) ; dans laquelle le constituant (C) diamine secondaire de formule (I) est de>0, 200 pour cent en poids (% en poids) à 0,500 % en poids sur la base du poids total de la composition de polyoléfine durcissable à l'humidité.

2. Composition selon la revendication 1, dans laquelle dans le (C) diarylamine secondaire de formule (I) : (i) chaque Ar est le benzène-1,4-diyle ; (ii) les deux Ar sont liés l'un à l'autre et pris conjointement constituent avec le NH de formule (I) un carbazol-3,6-diyle ; (iii) chaque R¹ est indépendamment l'hydrocarbyle en (C₁ à C₁₀) ; (iv) chaque R¹ est indépendamment l'hydrocarbyle en (C₇ à C₂₀) ; (v) chaque R¹ est indépendamment le benzyle, 1-phényléthyle, ou 1-méthyl-1-phényléthyle ; (vi) 1-méthyl-1-phényléthyle ; (vii) les deux (i) et l'un quelconque de (iii) à (vi) ; ou (viii) les deux (ii) et l'un quelconque de (iii) à (vi).

3. Composition selon la revendication 1 ou 2 dans laquelle le (C) diamine secondaire de formule (I) est : (i) de 0,220 % en poids à 0,500 % en poids, (ii) de 0,250 % en poids à 0,50 % en poids, ou (iii) de 0,220 % en poids à 0,40 % en poids ; tous basés sur le poids total de la composition de polyoléfine durcissable à l'humidité.

4. Composition selon l'une quelconque des revendications 1 à 3, dans laquelle le (B) catalyseur de condensation acide est (i) un acide organosulfonique, un acide organophosphonique, ou un halogénure d'hydrogène ; (ii) un acide organosulfonique ; (iii) un acide arylsulfonique substitué par un alkyle ; (iv) un acide arylsulfonique substitué par un alkyle dans laquelle il y a 1 ou 2 substituant(s) alkyle en (C₅ à C₂₀) et 1 groupe aryle qui est le phényle ou le naphtyle ; (v) un acide alkylphosphonique en (C₁ à C₅), dans laquelle l'alkyle en (C₁-C₅) est non substitué ou substitué par un groupe -NH₂ ; (vi) HF, HCl ou HBr ; (vii) une combinaison de deux quelconques de (i) à (vi) ou plus.

5. Composition selon l'une quelconque des revendications 1 à 4 dans laquelle, dans le (A) prépolymère de polyoléfine à fonction de (groupe silyle hydrolysable) : (i) chaque groupe silyle hydrolysable est indépendamment un groupe monovalent de formule (II) : (R²)ₘ(R³)₃₋ₘSi- (II) ; dans laquelle l'indice m est un nombre entier 1, 2 ou 3 ; chaque R² est indépendamment H, HO-, alcoxy en (C₁ à C₆), carboxy en (C₂ à C₆), ((C₁-C₆)alkyl)₂N-, (C₁-C₆)alkyl(H)C=NO-, ou ((C₁-C₆)alkyl)₂C=NO- ; et chaque R³ est indépendamment l'alkyle en (C₁ à C₆) ou le phényle ; (ii) la polyoléfine est à base de polyéthylène, à base de poly(éthylène-*co*-alpha-oléfine en (C₁ à C₄₀)), ou une combinaison de ceux-ci ; ou (iii) les deux (i) et (ii).

6. Composition selon l'une quelconque des revendications 1 à 5, comprenant en outre au moins un additif choisi parmi : (D) un ou deux seconds antioxydants, ayant chacun une structure différente de la formule (I) et l'un de l'autre ; (E) au moins un polymère à base d'éthylène ; (F) un colorant ; (G) un désactivateur de métaux ; (H) un silane hydrolysable sans (liaison carbone-carbone insaturée) ; (I) un inhibiteur de corrosion ; et (J) une combinaison de deux quelconques de (D) à (I) ou plus.

7. Formulation en deux parties comprenant des première et seconde parties, dans laquelle la première partie est constituée sensiblement de (A) un prépolymère polyoléfinique à fonction de (groupe silyle hydrolysable) ; dans laquelle la seconde partie est constituée sensiblement de (B) un catalyseur de condensation acide et (C) une diarylamine secondaire de formule (I) : (R¹-Ar)₂NH (I), dans laquelle chaque Ar est le benzène-1,4-diyle ou les deux Ar sont liés l'un à l'autre et pris conjointement constituent avec le NH de formule (I) un carbazol-3,6-diyle ; et chaque R¹ est indépendamment l'hydrocarbyle en (C₁ à C₂₀) ; dans laquelle le constituant (C) diamine secondaire de formule (I) est de>0, 200 pour cent en poids (%en poids) à 0,500 % en poids sur la base du poids total de la formulation à deux parties.

8. Formulation en deux parties selon la revendication 7, dans laquelle la seconde partie consiste en outre essentiellement en au moins un additif choisi parmi : D) un ou deux seconds antioxydants, chacun ayant une structure différente de la formule (I) et l'un de l'autre ; (E) au moins un polymère à base d'éthylène ; (F) un colorant ; (G) un désactivateur de métaux ; (H) un silane hydrolysable sans (liaison carbone-carbone insaturée) ; (I) un inhibiteur de corrosion ; et (J) une combinaison de deux quelconques de (D) à (I) ou plus.

9. Procédé de fabrication d'une composition de polyoléfine durcissable à l'humidité, le procédé comprenant la mise en contact d'une première partie qui est constituée essentiellement du constituant (A) selon la revendication 1 ou 5 avec une seconde partie qui est constituée essentiellement du constituant (B) selon la revendication 1, 2 ou 3 et du constituant (C) selon la revendication 1 ou 4, et facultativement de l'au moins un additif selon la revendication 6, de façon à donner la composition.

10. Composition de polyoléfine durcie à l'humidité qui est un produit de durcissement à l'humidité de la composition de polyoléfine durcissable à l'humidité selon l'une quelconque des revendications 1 à 6, ou la composition fabriquée par le procédé selon la revendication 9, pour donner la composition de polyoléfine durcie à l'humidité.

11. Article manufacturé comprenant une forme profilée de la composition selon l'une quelconque des revendications 1 à 6, ou de la composition réalisée par le procédé selon la revendication 9.

12. Conducteur revêtu comprenant une âme conductrice et une couche polymère entourant au moins partiellement l'âme conductrice, dans lequel au moins une partie de la couche polymère comprend ou est préparée à partir de la composition de l'une quelconque des revendications 1 à 6 ou de la composition réalisée par le procédé selon la revendication 9.

13. Procédé de conduction d'électricité, le procédé comprenant l'application d'une tension à travers l'âme conductrice du conducteur revêtu selon la revendication 12 de façon à générer un flux d'électricité à travers l'âme conductrice.
